**Europäisches Patentamt**

(19) **European Patent Office**

**Office européen des brevets**

(11) Veröffentlichungsnummer: **0 120 900**
**B1**

(12) **EUROPÄISCHE PATENTSCHRIFT**

(45) Veröffentlichungstag der Patentschrift:
13.08.86

(51) Int. Cl.⁴: **G 01 D 5/20**

(21) Anmeldenummer: 83903149.9

(22) Anmeldetag: 03.10.83

(86) Internationale Anmeldenummer:
**PCT/AT 83/00030**

(87) Internationale Veröffentlichungsnummer:
**WO 84/01427 (12.04.84 Gazette 84/10)**

(54) **INDUKTIVE LÄNGEN- UND WEGMESSEINRICHTUNG.**

(30) Priorität: 05.10.82 AT 3682/82

(43) Veröffentlichungstag der Anmeldung:
10.10.84 Patentblatt 84/41

(45) Bekanntmachung des Hinweises auf die Patenterteilung:
13.08.86 Patentblatt 86/33

(84) Benannte Vertragsstaaten:
BE CH DE FR GB LI LU NL SE

(56) Entgegenhaltungen:
**Review of Scientific Instruments, vol. 49, no. 3, March 1978, New York (US), J.F. Ellis et al.: "Moving coil linear variable differential transformer", pages 398-400**

(73) Patentinhaber: **RUDOLF SCHMIDT, Armaturen- u. Gusswerk Gesellschaft m.b.H., Kasernenweg 6, A-9500 Villach (AT)**

(72) Erfinder: **RAJAKOVICS, Gundolf, E., Lobming 3, A-8713 St. Stefan (AT)**

(74) Vertreter: **Barger, Erich, Dipl.- Ing., Patentanwälte Mitscherlich -Gunschmann- Dr. Körber -Schmidt- Evers- Melzer Steinsdorf Strasse 10, D-8000 München 22 (DE)**

EP 0 120 900 B1

## Beschreibung

Die Erfindung betrifft eine induktive Längen- und Wegmeßeinrichtung mit einer von einem Wechselstrom durchflossenen äußeren, feststehenden Feldwicklung und einer inneren, koaxial zur Feldwicklung verstellbaren, als Meßglied dienenden Meßwicklung ohne ferromagnetischen Kern.

Bei den bekannten Meßeinrichtungen dieser Art wird die in der Meßwicklung induzierte Spannung als Kriterium für die Lage des Meßgliedes benützt. Wegen der unvermeidlichen inneren und äußeren Störungen des Magnetfeldes sowie wegen der inhomogenen Ausbildung des Magnetfeldes genügt die Meßgenauigkeit höheren Ansprüchen nicht. Die Ausschaltung oder Kompensierung solcher Störeinflüsse erfordert einen hohen technischen Aufwand, der nur selten vertretbar ist.

Die Erfindung bezweckt die Schaffung einer solchen Meßeinrichtung mit hoher Genauigkeit, wobei dieses Ziel mit einfachen Mitteln erreicht werden soll. Grundgedanke der Erfindung ist, die Störeinflüsse nicht zu beseitigen oder zu kompensieren, sondern ein genaues Meßsignal zu bilden, in dem die Störeinflüsse gemessen und bei der Bildung des Meßsignales berücksichtigt werden.

Erfindungsgemäß wird dies bei einer Einrichtung der eingangs gennanten Art dadurch erreicht, daß zwischen Feldwicklung und Meßwicklung koaxial und relativ zur Feldwicklung ruhend eine Vergleichswicklung angeordnet ist, wobei der Quotient aus der in der Meßwicklung induzierten Spannung und der in der Vergleichswicklung induzierten Spannung als Meßsignal für die Stellung des Meßgliedes dient.

Die Genauigkeit der Messung kann noch dadurch erhöht werden daß mittels externer Widerstände der in der Meßwicklung und der in der Vergleichswicklung fließende Strom auf einen Wert kleiner als das 0,01 fache, vorzugsweise kleiner als das 0,001 fache des Wertes des die Feldwicklung durchfließenden Stromes eingestellt wird. Der Einfluß von Streufeldern kann dadurch herabgesetzt werder, daß die Meßwicklung länger, vorzugsweise mehr als 20% länger, als die Feldwicklung gemacht wird. Zur Verringerung des Streufeldes selbst können stirnseitig an die Feldwicklung anschließende Weicheisenringe vorhanden sein.

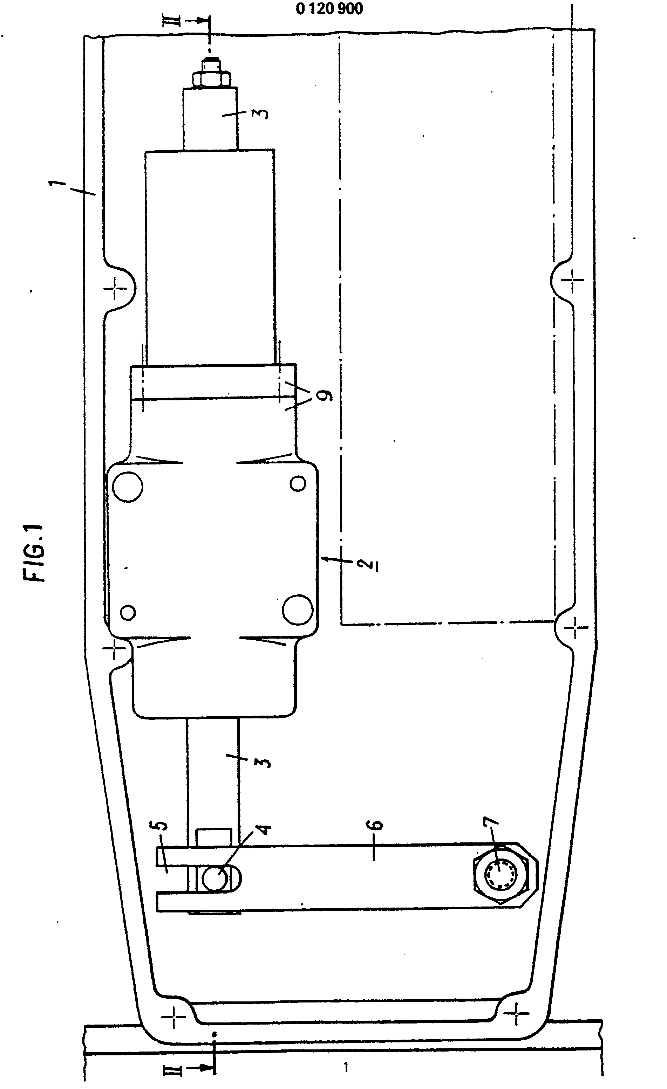

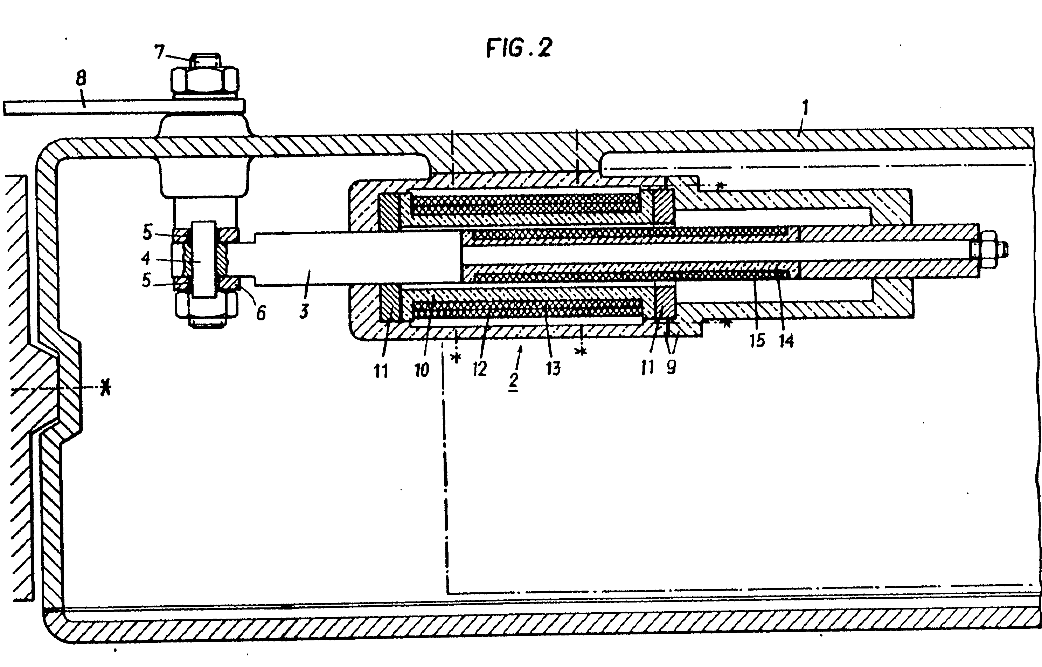

Der Gegenstand der Erfindung ist in der Zeichnung in einer beispielsweisen Ausführungsform dargestellt. Es zeigen Fig. 1 eine Seitenansicht der Meßeinrichtung und Fig. 2 einen Schritt nach der Linie II - II in Fig. 1.

In einem Gehäuse 1 ist die eigentliche Meßeinrichtung 2 fix angeordnet, wobei ein Kern 3 axial verschiebbar in dieser Einrichtung ist. Der Kern ragt beiderseits heraus und ist mit einem Stift 4 versehen, der in einer Schlitz 5 eines Armes 6 eingreift, der auf einer nach außer geführten Welle 7 befestigt ist. An den nach außen vorstehenden Abschnitt der Welle 7 greift ein Hebel 8 an, der mit dem Element in Verbindung steht, dessen jeweilige Lage durch die erfindungsgemäße Einrichtung gemässen werden soll.

Die Meßeinrichtung 2 besteht aus einem zweiteiligen Gehäuse 9, das eine feststehende Spule 10 umfaßt, an die sich beiderseits Weicheisenringe 11 anschließen. Die Spule 10 trägt eine Feldwicklung 12, die von hochfrequentem Wechselstrom durchflossen ist. Zwischen dieser Feldwicklung 12 einerseits und Spule 10 und Kern 3 andererseits ist eine weitere Wicklung 13 vorgesehen, die zu Vergleichszwecken dient. Beide Wicklungen 12, 13 sind gleich lang und koaxial zueinander angeordnet. Der von ferromagnetischem Material freie Kern 3 trägt eine Spule 14, die mit der Meßwicklung 15 versehen ist. Diese ist etwa 20% länger als die Feldwicklung 12. Der Kern 3 ist im Gehäuse 9 leicht verschiebbar angeordnet.

Die Anschlüsse der Wicklungen sind nicht dargestellt, weil sie den üblichen Ausführungsformen entsprechen.

Die Feldwicklung 12 kann beispielsweise von einem Wechselstrom mit etwa 10 kHz und etwa 10 bis 20 mA durchflossen sein, wodurch in ihrem Inneren ein homogenes Magnet-Wechselfeld erzeugt wird. Die in der Meßwicklung 15 induzierte Spannung ist proportional der zeitlichen Änderung des Magnetfeldes und der Zahl der geschnittenen Windungen. Die in der Vergleichswicklung erzeugte Spannung ist ebenfalls proportional der zeitlichen Änderung des Magnetfeldes und der Zahl der Windungen dieser Spule. Die erzeugten Wechselspannungen werden der Meß- und der Vergleichswicklung hochohmig entnommen, um Rückwirkungen zu vermeiden, und gleichgerichtet. Beide Spannungen werden gemessen. Das Meßergebnis der Meßwicklung wird durch das Meßergebnis der Vergleichswicklung dividiert; das Divisionsergebnis wird noch mit einem konstanten Korrekturfaktor versehen, der die unterschiedlichen Eigenschaften der beiden Wicklungen berücksichtigt. Der sich ergebende Wert wird als Meßsignal benützt.

Jede Störung im Magnetfeld wirkt durch die erfindungsgemäße Ausbildung der Meßeinrichtung in gleicher Weise auf die Vergleichswicklung wie auch auf die Meßwicklung. Durch die Division der beiden, durch die Induktion erhaltenen Spannungswerte, wird die Störung eliminiert und ein genauer Meßwert erhalten.

## Patentansprüche

1. Induktive Längen- und Wegmeßeinrichtung mit einer von einem Wechselstrom durchflossenen äußeren, feststehenden Feldwicklung (12) und einer inneren, koaxial zur Feldwicklung (12) verstellbaren, als Meßglied dienenden Meßwicklung (15) ohne ferromagnetischen Kern, dadurch gekennzeichnet, daß zwischen Feldwicklung (12) und Meßwicklung (15) koaxial und relativ zur Feldwicklung ruhend eine Vergleichswicklung (13) angeordnet ist, wobei der Quotient aus der in der Meßwicklung (15) induzierten Spannung und der in der Vergleichswicklung (13) induzierten Spannung als Meßsignal für die Stellung des Meßgliedes dient.

2. Meßeinrichtung nach Anspruch 1, dadurch gekennzeichnet, daß mittels externer Widerstände der in der Meßwicklung (15) und der in der Vergleichswicklung (13) fließende Strom auf einen Wert kleiner als das 0,01 fache, vorzugsweise kleiner als das, 0,001 fache des Wertes des die Feldwicklung (12) durchfließenden Stromes eingestellt ist.

3. Meßeinrichtung nach Anspruch 1 oder 2, dadurch gekennzeichnet, daß die Meßwicklung (15) länger, vorzugsweise mehr als 20% länger, als die Feldwicklung (12) ist.

4. Meßeinrichtung nach Anspruch 1, 2 oder 3, dadurch gekennzeichnet, daß zur Verringerung des Streufeldes stirnseitig an die Feldwicklung (12) anschließende Weicheisenringe vorhanden sind.

## Claims

1. Inductive length- and displacement-measuring device comprising an outer, fixed field winding (12), through which an alternating current flows, and an inner measuring winding (15) which can be adjusted coaxially to the field winding (12) and is used as the measuring element, without ferromagnetic core, characterized in that a reference winding (13) is arranged between the field winding (12) and measuring winding (15) coaxially with and at rest relative to the field winding (12), the quotient of the voltage induced in the measuring winding (15) and the voltage induced in the reference winding (13) being used as the measuring signal for the position of the measuring element.

2. Measuring device according to Claim 1, characterized in that the current flowing in the measuring winding (15) and the current flowing in the reference winding (13) is set by means of external resistors to a value which is lower than 0.01 times, preferably lower than 0.001 times the value of the current flowing through the field winding (12).

3. Measuring device according to Claim 1 or 2, characterized in that the measuring winding (15) is longer, preferably more than 20% longer, than the field winding (12).

4. Measuring device according to Claim 1, 2 or 3, characterized in that soft iron rings adjoining the end face of the field winding (12) are present for reducing the stray field.

## Revendications

1. Appareil inductif de mesure de longueurs et de déplacements, comprenant un enroulement de champ (12) extérieur fixe, parcouru par un courant alternatif, et un enroulement de mesure (15) intérieur, qui est déplaçable coaxialement à l'enroulement de champ (12) et sert d'organe de mesure, sans noyau ferromagnétique, caractérisé en ce qu'un enroulement de comparaison (13) est disposé coaxialement et immobile par rapport à l'enroulement de champ (12) entre celui-ci et l'enroulement de mesure (15) et que le quotient de la tension induite dans l'enroulement de mesure (15) et de la tension induite dans l'enroulement de comparaison (13) est utilisé comme signal de mesure pour la position de l'organe de mesure.

2. Appareil de mesure selon la revendication 1, caractérisé en ce que l'intensité du courant circulant dans l'enroulement de mesure (15) et dans l'enroulement de comparaison (13) est ajustée, au moyen de résistances externes, à moins de 0,01 fois, de préférence à moins de 0,001 fois l'intensité du courant parcourant l'enroulement de champ (12).

3. Appareil de mesure selon la revendication 1 ou 2, caractérisé en ce que l'enroulement de mesure (15) est plus long que l'enroulement de champ (12), de préférence plus de 20 % plus long.

4. Appareil de mesure selon la revendication 1, 2 ou 3, caractérisé en ce que des bagues en fer doux sont disposées contre les extrémités de l'enroulement de champ (12) pour réduire le champ de dispersion.

FIG.1

FIG.2

0 120 900